# EUROPÄISCHE PATENTANMELDUNG

(11) **EP 4 494 797 A1**
(43) Veröffentlichungstag der Anmeldung: **22.01.2025**
(21) Anmeldenummer: 24189208.2
(22) Anmeldetag: 17.07.2024
(51) Int. Cl.: B23K 9/173, H01R 9/11, H01R 13/641, H01R 13/627

(54) **STECKVORRICHTUNG ZUM VERBINDEN EINES SCHWEISSBRENNERS MIT EINER SCHWEISSSTROMQUELLE UND VERBINDUNGSEINRICHTUNG MIT EINER STECKVORRICHTUNG**

(30) Priorität: 18.07.2023 DE 202023104023 U
(71) Anmelder: Lorch Schweisstechnik GmbH, 71549 Auenwald (DE)
(72) Erfinder: Rimböck, Andreas, 71636 Ludwigsburg (DE)
(74) Vertreter: Hoeger, Stellrecht & Partner Patentanwälte mbB

(57) **Zusammenfassung**

Die Erfindung betrifft eine Steckvorrichtung (10) zum Verbinden eines Schweißbrenners mit einer Schweißstromquelle, wobei die Steckvorrichtung (10) einen Steckbolzen (22) zum Übertragen eines Schweißstroms und mehrere Kontaktglieder (28) zum Übertragen von Steuersignalen und/oder mindestens einer Versorgungsspannung aufweist, wobei der Steckbolzen (22) in einer Steckrichtung (24) in eine Steckbolzenaufnahme (26) einer Anschlussvorrichtung (14) einführbar ist, und wobei die Steckvorrichtung (10) ein Arretierungsglied (32) aufweist zum Arretieren der Steckvorrichtung (10) an der Anschlussvorrichtung (14). Um die Steckvorrichtung (10) derart weiterzubilden, dass eine vollständige Arretierung der Steckvorrichtung (10) an der Anschlussvorrichtung (14) leichter erkannt werden kann, wird vorgeschlagen, dass das Arretierungsglied (32) eine elektrisch leitfähige Kontaktfläche (64) aufweist, die im vollständig arretierten Zustand der Steckvorrichtung (10) an mindestens ein elektrisches Kontaktelement (68, 70) der Anschlussvorrichtung (14) anlegbar ist, wobei über die Kontaktfläche (64) im vollständig arretierten Zustand der Steckvorrichtung (10) ein elektrisches Prüfsignal übertragbar ist. Außerdem wird eine Verbindungseinrichtung (12) mit einer derartigen Steckvorrichtung (10) und einer Anschlussvorrichtung (14) vorgeschlagen.

## Beschreibung

Die Erfindung betrifft eine Steckvorrichtung zum Verbinden eines Schweißbrenners mit einer Schweißstromquelle, wobei die Steckvorrichtung einen Steckbolzen zum Übertragen eines Schweißstroms und mehrere Kontaktglieder zum Übertragen von Steuersignalen und/oder mindestens einer Versorgungsspannung aufweist, wobei der Steckbolzen in einer Steckrichtung in eine Steckbolzenaufnahme einer Anschlussvorrichtung einführbar ist, und wobei die Steckvorrichtung ein Arretierungsglied aufweist zum Arretieren der Steckvorrichtung an der Anschlussvorrichtung.

Außerdem betrifft die Erfindung eine Verbindungseinrichtung mit einer derartigen Steckvorrichtung und mit einer Anschlussvorrichtung.

Mittels einer derartigen Steckvorrichtung kann ein Schweißbrenner an eine Anschlussvorrichtung angeschlossen werden zum Verbinden der Steckvorrichtung mit einer Schweißstromquelle, so dass dem Schweißbrenner von der Schweißstromquelle Schweißstrom sowie Steuersignale und/oder mindestens eine Versorgungsspannung bereitgestellt werden können. Die Anschlussvorrichtung kann beispielsweise an der Schweißstromquelle angeordnet sein oder auch an einer Drahtvorschubeinheit, die mit der Schweißstromquelle elektrisch verbindbar ist. Zum Übertragen des Schweißstroms weist die Steckvorrichtung einen Steckbolzen auf, der in einer Steckrichtung in eine Steckbolzenaufnahme der Anschlussvorrichtung eingeführt werden kann, und zum Übertragen von Steuersignalen und/oder mindestens einer Versorgungsspannung weist die Steckvorrichtung mehrere Kontaktglieder auf, die mit komplementär ausgestalteten Gegenkontaktgliedern der Anschlussvorrichtung elektrisch verbindbar sind.

Die Steckvorrichtung kann ergänzend auch mindestens ein Codierglied aufweisen, das mit einem komplementär ausgestalteten Gegencodierglied der Anschlussvorrichtung steckbar verbindbar ist. Mittels des mindestens einen Codierglieds kann sichergestellt werden, dass die Steckvorrichtung nur an eine passende Anschlussvorrichtung anschließbar ist.

In vielen Fällen weist die Steckvorrichtung darüber hinaus einen Gasanschluss auf, wobei dem Schweißbrenner über den Gasanschluss Gas bereitgestellt werden kann, insbesondere Schutzgas, beispielsweise Kohlendioxid, Helium oder Argon.

Der Steckbolzen ist häufig hohl ausgestaltet, so dass dem Schweißbrenner durch den Steckbolzen hindurch ein Schweißdraht zugeführt werden kann.

Die Steckvorrichtung kann auch einen Kühlwasserzulaufanschluss und einen Kühlwasserrücklaufanschluss aufweisen zum Einbinden des Schweißbrenners in einen Kühlwasserkreislauf.

Die Verbindung der Steckvorrichtung mit dem Schweißbrenner kann beispielsweise über ein an sich bekanntes Schlauchpaket erfolgen. Die Steckvorrichtung kann derart ausgestaltet sein, dass das Schlauchpaket unmittelbar an die Steckvorrichtung angeschlossen werden kann. Alternativ kann vorgesehen sein, dass die Steckvorrichtung einen Adapter ausbildet, der an die Anschlussvorrichtung anschließbar ist und an den wiederum ein mit dem Schlauchpaket verbundenes, an sich bekanntes Anschlussteil angeschlossen werden kann, beispielsweise ein sogenannter Euro-Zentralanschluss.

Um sicherzustellen, dass sich die Steckvorrichtung nicht unbeabsichtigt von der Anschlussvorrichtung löst, weist die hier in Rede stehende Steckvorrichtung ein Arretierungsglied auf. Mit Hilfe des Arretierungsglieds kann die Steckvorrichtung an der Anschlussvorrichtung arretiert werden.

Beim Verbinden der Steckvorrichtung mit der Anschlussvorrichtung muss der Bediener sorgfältig darauf achten, dass die Steckvorrichtung ihren vollständig arretierten Zustand an der Anschlussvorrichtung einnimmt, da ansonsten die auslegungsgemäße Übertragung des Schweißstroms, der Steuersignale und/ oder der mindestens einen Versorgungsspannung und etwaiger sonstiger Schweißmedien, beispielsweise Gas und Schweißdraht, nicht sichergestellt ist und auch die Gefahr besteht, dass die Steckvorrichtung und/oder die Anschlussvorrichtung beim Betrieb beschädigt werden oder sich die Steckvorrichtung unbeabsichtigt von der Anschlussvorrichtung löst.

Aufgabe der vorliegenden Erfindung ist es daher, eine Steckvorrichtung der eingangsgenannten Art derart weiterzubilden, dass eine vollständige Arretierung der Steckvorrichtung an der Anschlussvorrichtung leichter erkannt werden kann.

Diese Aufgabe wird bei einer Steckvorrichtung der eingangsgenannten Art erfindungsgemäß dadurch gelöst, dass das Arretierungsglied eine elektrisch leitfähige Kontaktfläche aufweist, die im vollständig arretierten Zustand der Steckvorrichtung an mindestens ein elektrisches Kontaktelement der Anschlussvorrichtung anlegbar ist, wobei über die Kontaktfläche im vollständig arretierten Zustand der Steckvorrichtung ein elektrisches Prüfsignal übertragbar ist.

Die erfindungsgemäße Steckvorrichtung weist ein Arretierungsglied auf, das eingerichtet und ausgebildet ist, die Steckvorrichtung an der Anschlussvorrichtung zu arretieren und im vollständig arretierten Zustand der Steckvorrichtung ein bereitgestelltes elektrisches Prüfsignal zu übertragen. Zu diesem Zweck weist das Arretierungsglied eine elektrisch leitfähige Kontaktfläche auf, die im vollständig arretierten Zustand der Steckvorrichtung an mindestens ein elektrisches Kontaktelement der Anschlussvorrichtung anlegbar ist. Im vollständig arretierten Zustand der Steckvorrichtung ist das Prüfsignal über die Kontaktfläche übertragbar. Anhand des Prüfsignals kann von einer Detektionseinrichtung der Schweißstromquelle oder des Schweißbrenners erkannt werden, ob die Steckvorrichtung ihren vollständig arretierten Zustand einnimmt und demzufolge der Steckbolzen vollständig in die Steckbolzenaufnahme eingeführt wurde.

Um den vollständig arretierten Zustand der Steckvorrichtung zu detektieren, kann zumindest ein Kontaktelement der Anschlussvorrichtung oder auch die elektrisch leitfähige Kontaktfläche des Arretierungsglieds der Steckvorrichtung mit einem elektrischen Prüfsignal beaufschlagt werden. Die elektrisch leitfähige Kontaktfläche ist im vollständig arretierten Zustand der Steckvorrichtung an das mindestens eine Kontaktelement der Anschlussvorrichtung anlegbar, so dass das Prüfsignal über die elektrisch leitfähige Kontaktfläche übertragbar ist. Die Kontaktfläche kann also einen Abschnitt eines Signalwegs des Prüfsignals ausbilden, wobei das Prüfsignal von einem Prüfsignalgenerator über den Signalweg - einschließlich der elektrisch leitfähigen Kontaktfläche des Arretierungsglieds - zu einer Detektionseinrichtung geführt werden kann, so dass diese das elektrische Prüfsignal detektieren kann. Dies gibt die Möglichkeit zu erfassen, ob die Steckvorrichtung ihren vollständig arretierten Zustand einnimmt und demzufolge die auslegungsgemäße Übertragung des Schweißstroms, der Steuersignale und/oder der mindestens einen Versorgungsspannung und etwaiger sonstiger Schweißmedien, beispielsweise Gas und Schweißdraht, sichergestellt ist und keine Gefahr besteht, dass die Steckvorrichtung und/oder die Anschlussvorrichtung beim Betrieb beschädigt werden oder sich die Steckvorrichtung unbeabsichtigt von der Anschlussvorrichtung löst.

Es kann beispielsweise vorgesehen sein, dass die Schweißstromquelle der Steckvorrichtung nur dann einen Schweißstrom, Steuersignale und/oder mindestens eine Versorgungsspannung und/oder sonstige Schweißmedien, beispielsweise Gas oder Schweißdraht bereitstellt, wenn das über die elektrisch leitfähige Kontaktfläche des Arretierungsglieds übertragene Prüfsignal von der Detektionseinrichtung detektiert wurde. Ist dies nicht der Fall, so kann dies die Schweißstromquelle veranlassen, dem Schweißbrenner weder Schweißstrom, Steuersignale und Versorgungsspannungen noch sonstige Schweißmedien bereitzustellen.

Günstigerweise umfasst die Steckvorrichtung ein elektrisches Anzeigeelement, an dem der vollständig arretierte Zustand der Steckvorrichtung anzeigbar ist. Alternativ oder ergänzend kann vorgesehen sein, dass die Anschlussvorrichtung ein elektrisches Anzeigeelement umfasst, an dem der vollständig arretierte Zustand der Steckvorrichtung anzeigbar ist.

Als Anzeigeelement kommt bevorzugt eine Leuchtdiode zum Einsatz.

Bevorzugt ist das elektrische Anzeigeelement in den Signalweg des über die elektrisch leitfähige Kontaktfläche des Arretierungsglieds übertragbaren Prüfsignals eingebunden.

Bei einer vorteilhaften Ausgestaltung der Erfindung ist die elektrisch leitfähige Kontaktfläche des Arretierungsglieds im vollständig arretierten Zustand der Steckvorrichtung gleichzeitig an zumindest ein erstes und ein zweites elektrisches Kontaktelement der Anschlussvorrichtung anlegbar. Dies gibt beispielsweise der Schweißstromquelle die Möglichkeit, das erste elektrische Kontaktelement mit dem elektrischen Prüfsignal zu beaufschlagen, das im vollständig arretierten Zustand der Steckvorrichtung, in dem die elektrisch leitfähige Kontaktfläche des Arretierungsglieds gleichzeitig am ersten und am zweiten elektrischen Kontaktelement anliegt, vom ersten elektrischen Kontaktelement über die elektrisch leitfähige Kontaktfläche zum zweiten elektrischen Kontaktelement übertragen werden kann, so dass das Prüfsignal im vollständig arretierten Zustand der Steckvorrichtung über das zweite elektrische Kontaktelement einer Detektionseinrichtung der Schweißstromquelle zugeführt und detektiert werden kann.

Bevorzugt weist das Arretierungsglied einen sich unmittelbar an die elektrisch leitfähige Kontaktfläche anschließenden Bereich auf, der elektrisch leitfähig ist. Dies gibt die Möglichkeit, im vollständig arretierten Zustand der Steckvorrichtung ein Prüfsignal über die elektrisch leitfähige Kontaktfläche und den sich an die Kontaktfläche anschließenden elektrisch leitfähigen Bereich des Arretierungsglieds zu übertragen. Beispielsweise kann vorgesehen sein, dass der elektrisch leitfähige Bereich des Arretierungsglieds mit einem Kontaktglied der Steckvorrichtung elektrisch verbunden ist, so dass das Prüfsignal ausgehend von einem elektrischen Kontaktelement der Anschlussvorrichtung über die elektrisch leitfähige Kontaktfläche und den elektrisch leifähigen Bereich des Arretierungsglieds an ein Kontaktglied der Steckvorrichtung übertragen werden kann, von dem aus das Prüfsignal zu einem komplementär ausgestalteten Gegenkontaktglied der Anschlussvorrichtung der Schweißstromquelle zurückgeführt werden kann.

Günstig ist es, wenn das Arretierungsglied vollständig aus einem elektrisch leitfähigen Material besteht, beispielsweise aus einem Metall und/oder aus einem elektrisch leitfähigen Kunststoff. Dies gibt die Möglichkeit, das beispielsweise von der Schweißstromquelle bereitgestellte elektrische Prüfsignal über das gesamte Arretierungsglied zu übertragen.

Bevorzugt ist das Arretierungsglied zwischen einer Arretierungsstellung und einer Freigabestellung hin und her bewegbar, wobei das Arretierungsglied im vollständig arretierten Zustand der Steckvorrichtung die Arretierungsstellung einnimmt. Bei einer derartigen Ausgestaltung ist das elektrische Prüfsignal nur dann über die elektrisch leitfähige Kontaktfläche des Arretierungsglieds übertragbar, wenn das Arretierungsglied die Arretierungsstellung eingenommen hat.

Bei einer vorteilhaften Ausgestaltung der Erfindung bildet das Arretierungsglied einen Arretierungshebel aus, der um eine Schwenkachse zwischen der Arretierungsstellung und der Freigabestellung hin und her verschwenkbar ist.

Günstig ist es, wenn der Arretierungshebel ein Hintergreifelement aufweist, das die elektrisch leitfähige Kontaktfläche aufweist, wobei mittels des Hintergreifelements im vollständig arretierten Zustand der Steckvorrichtung ein Sperrelement der Anschlussvorrichtung hintergreifbar ist unter Anlage der elektrisch leitfähigen Kontaktfläche an dem mindestens einen elektrischen Kontaktelement der Anschlussvorrichtung. Bei einer derartigen Ausgestaltung der Erfindung kommt zur Arretierung der Steckvorrichtung an der Anschlussvorrichtung ein Arretierungshebel zum Einsatz, der um eine Schwenkachse zwischen einer Arretierungsstellung und einer Freigabestellung hin und her verschwenkt werden kann. Im vollständig arretierten Zustand der Steckvorrichtung nimmt der Arretierungshebel die Arretierungsstellung ein, wobei ein Hintergreifelement des Arretierungshebels ein Sperrelement der Anschlussvorrichtung der Schweißstromquelle hintergreift und die elektrisch leitfähige Kontaktfläche des Hintergreifelements an mindestens einem elektrischen Kontaktelement der Anschlussvorrichtung zur Anlage gelangt, so dass über die elektrisch leitfähige Kontaktfläche das Prüfsignal übertragen werden kann.

Bevorzugt ist der Arretierungshebel in der Arretierungsstellung in Längsrichtung des Steckbolzens ausgerichtet und weist an einem in Steckrichtung vorderen Ende das Hintergreifelement auf. Dies erleichtert die Handhabung der Steckvorrichtung, da der Arretierungshebel auf einfache Weise in axialer Richtung beispielsweise in eine dem Arretierungshebel zugeordnete Hebelaufnahme der Anschlussvorrichtung eingeführt werden kann, in der das Sperrelement angeordnet ist.

Die Schwenkachse des Arretierungshebels ist günstigerweise quer zur Längsrichtung des Steckbolzens ausgerichtet.

Bevorzugt wird die Schwenkachse von einem Schwenkbolzen der Steckvorrichtung definiert, der beispielsweise an einem Gehäuseteil der Steckvorrichtung gelagert ist.

Das Hintergreifelement besteht bei einer bevorzugten Ausgestaltung der Erfindung aus einem elektrisch leitfähigen Material und bildet die elektrisch leitfähige Kontaktfläche aus. Dies gibt die Möglichkeit, im Falle einer vollständigen Arretierung der Steckvorrichtung das beispielsweise von der Schweißstromquelle bereitgestellte elektrische Prüfsignal über das komplette Hintergreifelement zu übertragen.

Von Vorteil ist es, wenn der Arretierungshebel entgegen einer Rückstellkraft aus der Arretierungsstellung in die Freigabestellung bewegbar ist. Bei einer derartigen Ausgestaltung ist der Arretierungshebel in Richtung der Arretierungsstellung vorgespannt. Unter der Wirkung der Rückstellkraft kann der Arretierungshebel selbständig seine Arretierungsstellung einnehmen, sobald das Hintergreifelement das zugeordnete Sperrelement hintergreifen kann. Beim Einführen des Steckbolzens in die Steckbolzenaufnahme kann der Arretierungshebel zunächst entgegen der Rückstellkraft in seine Freigabestellung überführt werden. Dies kann beispielsweise dadurch erfolgen, dass das Hintergreifelement beim Einführen des Steckbolzens in die Steckbolzenaufnahme an einer dem Sperrelement unmittelbar vorgelagerten Rampe entlanggleitet. Sobald das Hintergreifelement das Sperrelement hintergreifen kann, kann der in Richtung der Arretierungsstellung vorgespannte Arretierungshebel selbsttätig seine Arretierungsstellung einnehmen, in der die elektrisch leitfähige Kontaktfläche des Hintergreifelements mindestens ein elektrisches Kontaktelement der Anschlussvorrichtung kontaktieren kann zur Übertragung des Prüfsignals.

Bei einer vorteilhaften Ausgestaltung der Erfindung weist die Steckvorrichtung ein Federelement auf zu Beaufschlagung des Arretierungshebels mit der Rückstellkraft. Das Federelement kann beispielsweise nach Art einer Blattfeder ausgestaltet sein.

Das Federelement besteht bevorzugt aus Metall.

Günstig ist es, wenn der Arretierungshebel aus einem elektrisch leitfähigen Material besteht, insbesondere aus Metall und/oder einem elektrisch leitfähigen Kunststoffmaterial. Dies hat unter anderem den Vorteil, dass das Prüfsignal entlang des Arretierungshebels geführt werden kann. Vorzugsweise liegt das Federelement an dem aus einem elektrisch leitfähigen Material bestehenden Arretierungshebel an und besteht ebenfalls aus einem elektrisch leitfähigen Material, insbesondere aus Metall, so dass das entlang des Arretierungshebels geführte Prüfsignal am Federelement abgegriffen werden kann.

Bevorzugt weist die Steckvorrichtung ein mit dem Arretierungshebel zusammenwirkendes, manuell betätigbares Betätigungselement auf zum Verschwenken des Arretierungshebels aus der Arretierungsstellung in die Freigabestellung. Das Betätigungselement erlaubt es dem Benutzer, den in Richtung der Arretierungsstellung vorgespannten Arretierungshebel entgegen der Wirkung der Rückstellkraft aus der Arretierungsstellung in die Freigabestellung zu verschwenken, so dass das Hintergreifelement das Sperrelement der Anschlussvorrichtung freigibt und der Benutzer die Steckvorrichtung von der Anschlussvorrichtung trennen kann.

Von besonderem Vorteil ist es, wenn der Arretierungshebel bezogen auf die Steckrichtung einen vorderen und einen hinteren Hebelarm aufweist, wobei das Hintergreifelement am freien Ende des vorderen Hebelarms angeordnet ist, und wobei das freie Ende des hinteren Hebelarms mit Hilfe des Betätigungselements mit einer Kraft zum Verschwenken des Arretierungshebels aus der Arretierungsstellung in die Freigabestellung beaufschlagbar ist. Bei einer derartigen Ausgestaltung der Erfindung ist der Arretierungshebel als zweiarmiger Hebel ausgestaltet, der bezogen auf die Steckrichtung einen vorderen und einen hinteren Hebelarm aufweist. Am freien Ende des vorderen Hebelarms ist das Hintergreifelement positioniert, und das freie Ende des hinteren Hebelarms wirkt mit einem Betätigungselement zusammen, das vom Bediener betätigt werden kann. Das Betätigungselement erlaubt es, das freie Ende des hinteren Hebelarms mit einer Kraft zu beaufschlagen, unter deren Wirkung der Arretierungshebel in die Freigabestellung bewegt wird. Dies ermöglicht es, die Arretierung der Steckvorrichtung an der Anschlussvorrichtung aufzuheben, so dass die Steckvorrichtung von der Anschlussvorrichtung getrennt werden kann.

Das Betätigungselement kann beispielsweise in Form eines Druckknopfs ausgestaltet sein, der an einem Gehäuse der Steckvorrichtung bewegbar gelagert ist.

Die Erfindung betrifft außerdem eine Verbindungseinrichtung mit einer Steckvorrichtung der voranstehend genannten Art und mit einer Anschlussvorrichtung , wobei die Anschlussvorrichtung eine Steckbolzenaufnahme aufweist, in die der Steckbolzen der Steckvorrichtung einführbar ist, sowie mehrere Gegenkontaktglieder, die jeweils mit einem Kontaktglied der Steckvorrichtung steckbar verbindbar sind, und wobei die Anschlussvorrichtung mindestens ein elektrisches Kontaktelement aufweist, an das die elektrisch leitfähige Kontaktfläche des Arretierungsglieds der Steckvorrichtung im vollständig arretierten Zustand anlegbar ist. Wie bereits erwähnt, kann im vollständig arretierten Zustand der Steckvorrichtung über das mindestens eine elektrische Kontaktelement der Anschlussvorrichtung und die an diesem anliegende elektrisch leitfähige Kontaktfläche des Arretierungsglieds der Steckvorrichtung ein Prüfsignal übertragen werden, das von einer Detektionseinrichtung detektiert werden kann.

Die Anschlussvorrichtung ist bevorzugt an der Schweißstromquelle angeordnet oder an einer Drahtvorschubeinheit, die mit der Schweißstromquelle elektrisch verbunden ist.

Bevorzugt weist die Anschlussvorrichtung mindestens ein erstes und ein zweites elektrisches Kontaktelement auf, an die die elektrisch leitfähige Kontaktfläche des Arretierungsglieds der Steckvorrichtung im vollständig arretierten Zustand der Steckvorrichtung gleichzeitig anlegbar ist.

Günstig ist es, wenn die Anschlussvorrichtung ein Sperrelement aufweist, das von einem Hintergreifelement der Steckvorrichtung hintergreifbar ist unter Anlage der elektrisch leitfähigen Kontaktfläche des Arretierungsglieds an dem mindestens einen elektrischen Kontaktelement der Anschlussvorrichtung.

Von Vorteil ist es, wenn die Anschlussvorrichtung eine Hebelaufnahme aufweist, in die das Hintergreifelement der Steckvorrichtung einführbar ist und in der das Sperrelement angeordnet ist.

Die Verbindungseinrichtung weist bevorzugt mindestens ein elektrisches Anzeigeelement auf, an dem der vollständig arretierte Zustand der Steckvorrichtung anzeigbar ist. Günstig ist es, wenn an der Steckvorrichtung und/oder an der Anschlussvorrichtung ein derartiges Anzeigeelement angeordnet ist. Dadurch kann ein Benutzer den vollständig arretierten Zustand der Steckvorrichtung besonders einfach erkennen. Das mindestens eine Anzeigeelement kann insbesondere als Leuchtdiode ausgestaltet sein.

Die nachfolgende Beschreibung bevorzugter Ausführungsformen der Erfindung dient im Zusammenhang mit der Zeichnung der näheren Erläuterung. Es zeigen:
- Figur 1:: eine perspektivische Darstellung einer Steckvorrichtung;
- Figur 2:: eine Längsschnittansicht einer Verbindungseinrichtung mit der Steckvorrichtung aus Figur 1 und mit einer Anschlussvorrichtung, wobei die Steckvorrichtung und die Anschlussvorrichtung getrennt dargestellt sind;
- Figur 3:: eine Längsschnittansicht der Verbindungseinrichtung aus Figur 2, wobei ein Steckbolzen der Steckvorrichtung in eine Steckbolzenaufnahme der Anschlussvorrichtung eingeführt ist und ein Arretierungsglied der Steckvorrichtung eine Arretierungsstellung einnimmt;
- Figur 4:: eine vergrößerte Darstellung von Detail X aus Figur 3, wobei der Steckbolzen in die Steckbolzenaufnahme eingeführt wird;
- Figur 5:: eine vergrößerte Darstellung von Detail X aus Figur 3, wobei der Steckbolzen vollständig in die Steckbolzenaufnahme eingeführt ist und das Arretierungsglied die Arretierungsstellung einnimmt;
- Figur 6:: eine vergrößerte Darstellung von Detail X aus Figur 3, wobei das Arretierungsglied eine Freigabestellung einnimmt;
- Figur 7:: eine perspektivische Teildarstellung der Verbindungseinrichtung aus Figur 3.

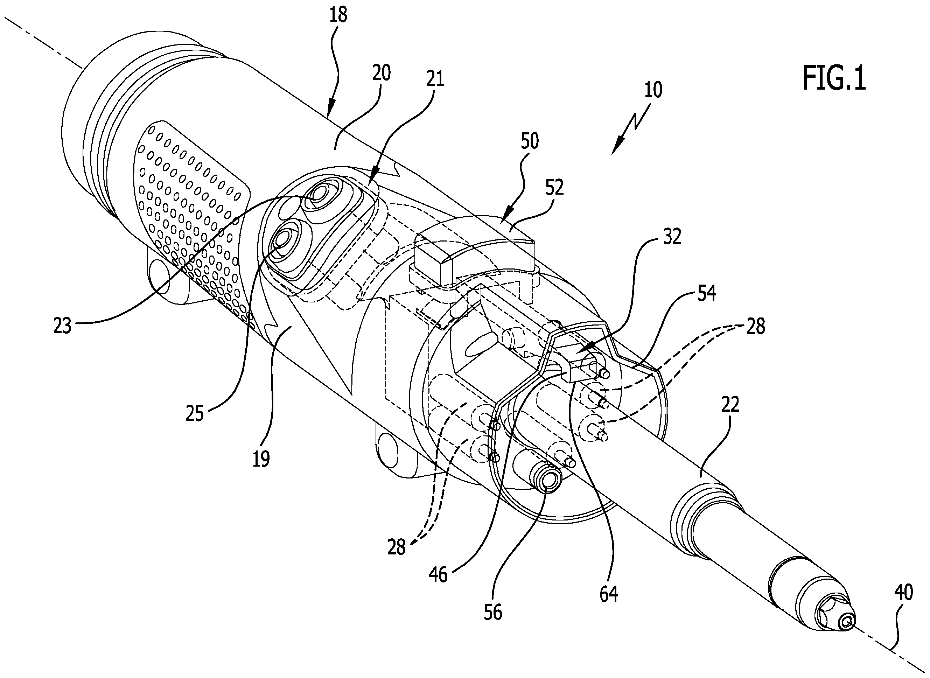

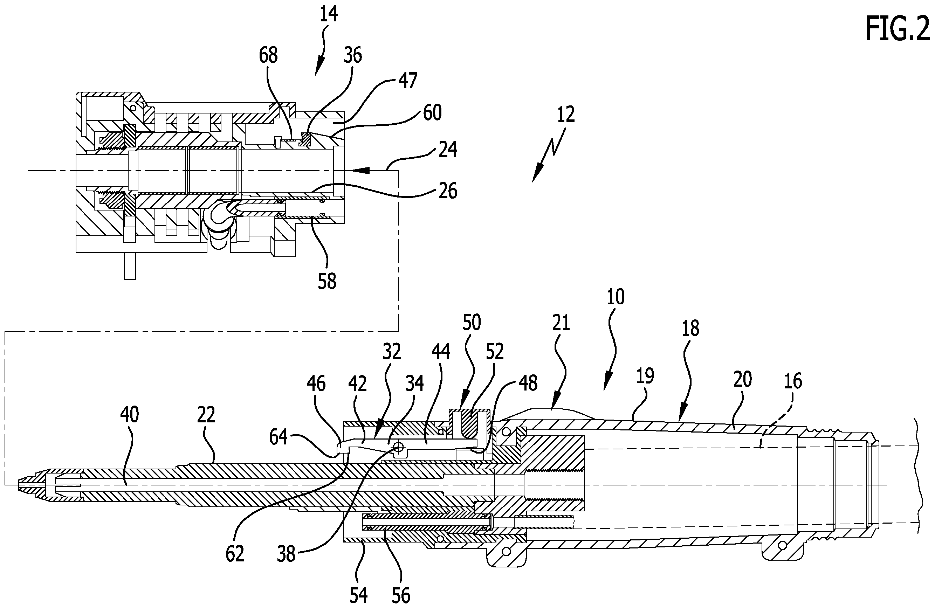

In Figur 1 ist schematisch eine vorteilhafte Ausführungsform einer erfindungsgemäßen Steckvorrichtung dargestellt, die insgesamt mit dem Bezugszeichen 10 belegt ist, und in den Figuren 2 bis 7 ist schematisch eine vorteilhafte Ausführungsform einer erfindungsgemäßen Verbindungseinrichtung 12 dargestellt, die die Steckvorrichtung 10 und eine Anschlussvorrichtung 14 aufweist. Die Anschlussvorrichtung 14 kann eine Baugruppe einer Schweißstromquelle ausbilden, in die eine Drahtvorschubeinrichtung integriert ist. Alternativ kann die Anschlussvorrichtung 14 eine Baugruppe einer separaten Drahtvorschubeinheit ausbilden, die mit einer Schweißstromquelle elektrisch verbunden ist.

Mittels der Steckvorrichtung 10 kann ein an sich bekannter und deshalb in der Zeichnung nicht dargestellter Schweißbrenner an die Anschlussvorrichtung 14 angeschlossen werden zum Verbinden des Schweißbrenners mit einer Schweißstromquelle, so dass dem Schweißbrenner von der Schweißstromquelle Schweißstrom, Steuersignale und gegebenenfalls mindestens eine Versorgungsspannung sowie auch Schutzgas, beispielsweise Kohlendioxid, Helium oder Argon bereitgestellt werden können. Bei der in den Figuren 1 bis 7 beispielhaft dargestellten Ausführungsform erfolgt die Verbindung der Steckvorrichtung 10 mit dem Schweißbrenner über ein an sich bekanntes Schlauchpaket 16, das an die Steckvorrichtung 10 angeschlossen und in Figur 2 gestrichelt dargestellt ist. Das Schlauchpaket weist eine Stromleitung und mehrere Steuerleitungen und gegebenenfalls mindesten eine Spannungsversorgungsleitung auf zur Übertragung des Schweißstroms und der Steuersignale und gegebenenfalls auch der mindestens einen Versorgungsspannung. Außerdem weist das Schlauchpaket eine Gasleitung auf zur Übertragung des Schutzgases.

Die Steckvorrichtung 10 weist ein Gehäuse 18 auf, das einen Handgriff 20 ausbildet, der vom Benutzer ergriffen werden kann und in den ein Endabschnitt des Schlauchpakets 16 eingeführt werden kann, so dass die Steckvorrichtung 10 unmittelbar mit dem Schlauchpaket 16 verbunden werden kann.

Alternativ kann vorgesehen sein, dass die Steckvorrichtung 10 einen Adapter ausbildet, der an die Anschlussvorrichtung 14 angeschlossen werden kann und an den wiederum ein mit dem Schlauchpaket 16 verbundenes, an sich bekanntes marktübliches Anschlussteil, beispielsweise ein sogenannter Euro-Zentralanschluss, angeschlossen werden kann.

Zur Übertragung von Schweißstrom weist die Steckvorrichtung 10 einen hohl ausgestalteten Steckbolzen 22 auf, der in einer Steckrichtung 24 in eine Steckbolzenaufnahme 26 der Anschlussvorrichtung 14 eingeführt werden kann. Die hohle Ausgestaltung des Steckbolzens 22 ermöglicht es, einen in der Zeichnung nicht dargestellten Schweißdraht durch den Steckbolzen 22 hindurchzuführen, so dass dem Schweißbrenner durch den Steckbolzen 22 hindurch ein Schweißdraht zugeführt werden kann. Der Schweißdraht kann dem Schweißbrenner über das Schlauchpaket 16 zugeführt werden.

Zur Übertragung von Steuersignalen und gegebenenfalls mindestens einer Versorgungsspannung weist die Steckvorrichtung 10 mehrere Kontaktglieder in Form von Kontaktstiften 28 auf, die mit komplementär ausgestalteten Gegenkontaktgliedern in Form von Gegenkontaktbuchsen der Anschlussvorrichtung 14 elektrisch verbindbar sind. Derartige Gegenkontaktbuchsen sind dem Fachmann an sich bekannt und deshalb zur Erzielung einer besseren Übersicht in der Zeichnung nicht dargestellt.

Das Gehäuse 18 weist in der beispielhaft dargestellten Ausführungsform an seiner Außenseite 19 eine Kühlwasserkupplung 21 auf mit einem Kühlwasserzulaufanschluss 23 und einem Kühlwasserrücklaufanschluss 25, über die der Schweißbrenner in einen Kühlkreislauf eingebunden werden kann. Zu diesem Zweck weist das Schlauchpaket eine Kühlwasserzulaufleitung und eine Kühlwasserrücklaufleitung auf. Die Einbindung des Schweißbrenners in einen Kühlwasserkreislauf ist nicht in allen Fällen erforderlich.

Zur Arretierung an der Anschlussvorrichtung 14 weist die Steckvorrichtung 10 ein zwischen einer Arretierungsstellung und einer Freigabestellung hin und her bewegbares Arretierungsglied 32 auf, das in der dargestellten Ausführungsform der Steckvorrichtung 10 als Arretierungshebel 34 ausgebildet ist und mit einem Sperrelement 36 der Anschlussvorrichtung 14 zusammenwirkt.

Der Arretierungshebel 34 ist um eine Schwenkachse 38 schwenkbar gelagert. Die Schwenkachse 38 ist quer zu einer Längsachse 40 des Steckbolzens 22 ausgerichtet. Bezogen auf die Steckrichtung 24 weist der Arretierungshebel 34 einen vorderen Hebelarm 42 und einen hinteren Hebelarm 44 auf.

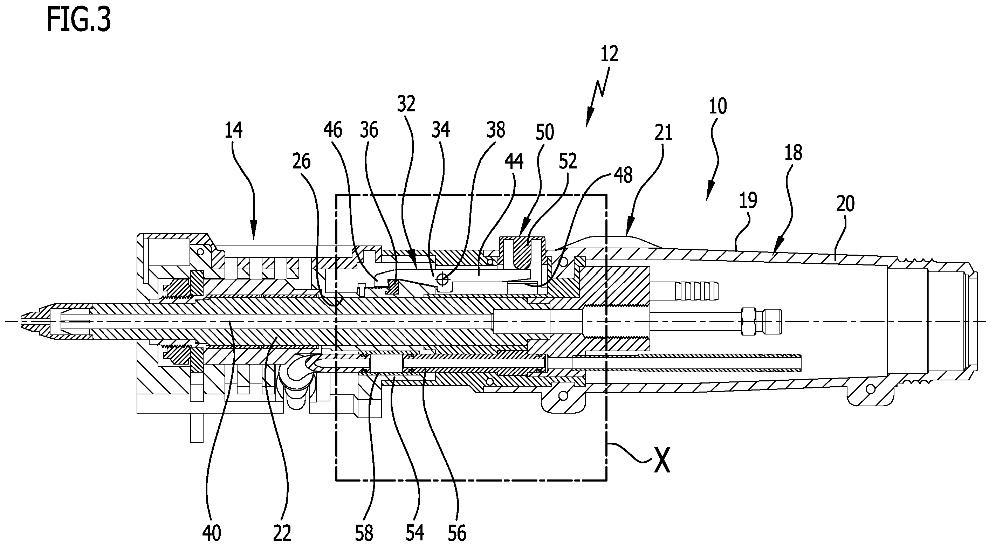

Am freien Ende des vorderen Hebelarms 42 ist ein hakenartiges Hintergreifelement 46 angeordnet, das im arretierten Zustand der Steckvorrichtung 10 das Sperrelement 36 hintergreift. Dies wird aus den Figuren 3, 5 und 6 deutlich.

Der hintere Hebelarm 44 wird von einem Federelement 48 der Steckvorrichtung 10 mit einer Rückstellkraft beaufschlagt, unter deren Wirkung der Arretierungshebel 34 in seine Arretierungsstellung vorgespannt wird, in der der Arretierungshebel 34 in Längsrichtung des Steckbolzens 22 ausgerichtet ist. Das Federelement 48 besteht aus Metall und ist in der dargestellten Ausführungsform als Blattfeder ausgestaltet.

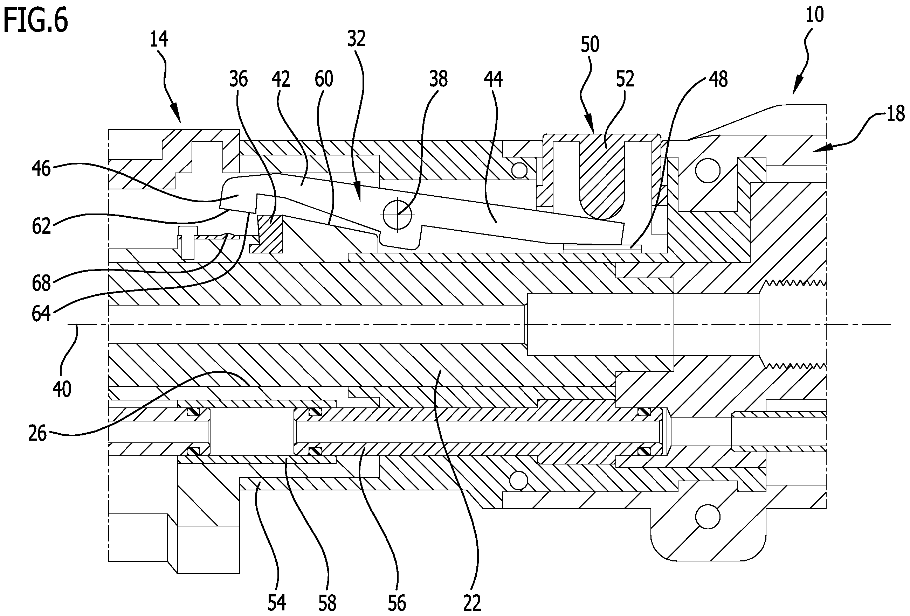

Mit Hilfe eines Betätigungselements 50 kann der Arretierungshebel 34 entgegen der Wirkung der vom Federelement 48 ausgeübten Rückstellkraft aus der Arretierungsstellung in eine Freigabestellung bewegt werden. Dies wird insbesondere aus Figur 6 deutlich. Das Betätigungselement 50 ist in der dargestellten Ausführungsform als Druckknopf 52 ausgebildet, der am Gehäuse 18 senkrecht zur Längsachse 40 verschiebbar gelagert ist und vom Benutzer betätigt werden kann.

An seinem bezogen auf die Steckrichtung 24 vorderen Ende trägt das Gehäuse 18 eine Führungshülse 54, die vom Steckbolzen 22 durchgriffen wird und die den Arretierungshebel 34 sowie die Kontaktstifte 28 und einen Gasanschluss 56 der Steckvorrichtung 10 in Umfangsrichtung umgibt. Der Gasanschluss 56 ist mit einem komplementär ausgestalteten Gasanschluss 58 der Anschlussvorrichtung 14 gasdicht verbindbar, so dass dem Schweißbrenner über die Anschlussvorrichtung 14 und die Steckvorrichtung 10 ein Schutzgas, beispielsweise Kohlendioxid, Helium oder Argon, zugeführt werden kann.

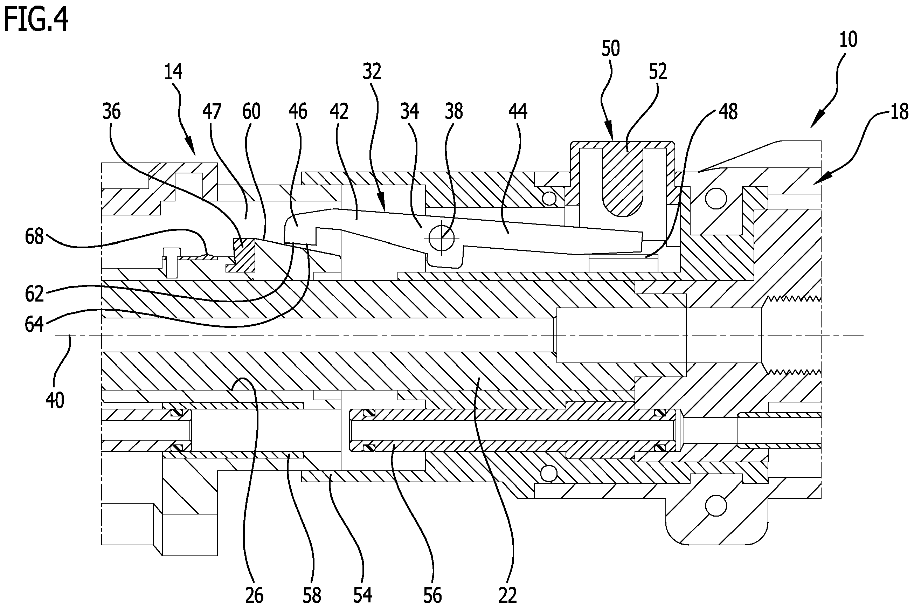

Beim Einführen des Steckbolzens 22 in die Steckbolzenaufnahme 26 taucht das Hintergreifelement 46 des Arretierungshebels 34 in eine Hebelaufnahme 47 ein und gleitet an einer dem Sperrelement 36 vorgelagerten Rampe 60 entlang, so dass sich der Arretierungshebel 34 entgegen der Wirkung der vom Federelement 48 ausgeübten Rückstellkraft aus der Arretierungsstellung in die Freigabestellung bewegt. Dies wird insbesondere aus Figur 4 deutlich. Das Sperrelement 36 und die Rampe 60 sind in der Hebelaufnahme 47 angeordnet.

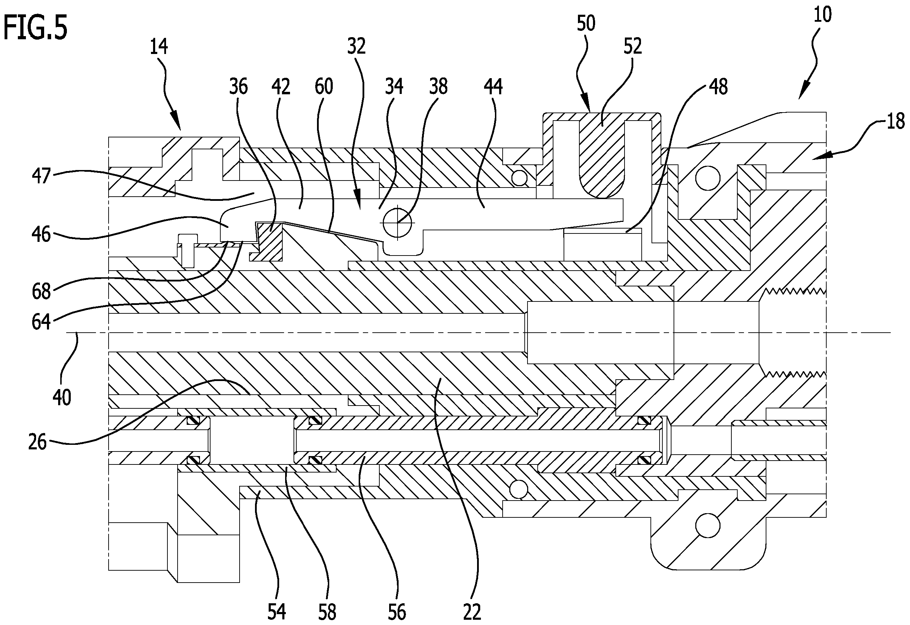

Sobald das Hintergreifelement 46 das der Rampe 60 abgewandte Ende des Sperrelements 36 überschritten hat, geht der Arretierungshebel 34 unter der Wirkung der Rückstellkraft des Federelements 48 selbsttätig in seine Arretierungsstellung über, in der das Hintergreifelement 46 das Sperrelement 36 hintergreift und die Steckvorrichtung 10 ihren vollständig arretierten Zustand an der Anschlussvorrichtung 14 einnimmt. Dies wird insbesondere aus Figur 5 deutlich.

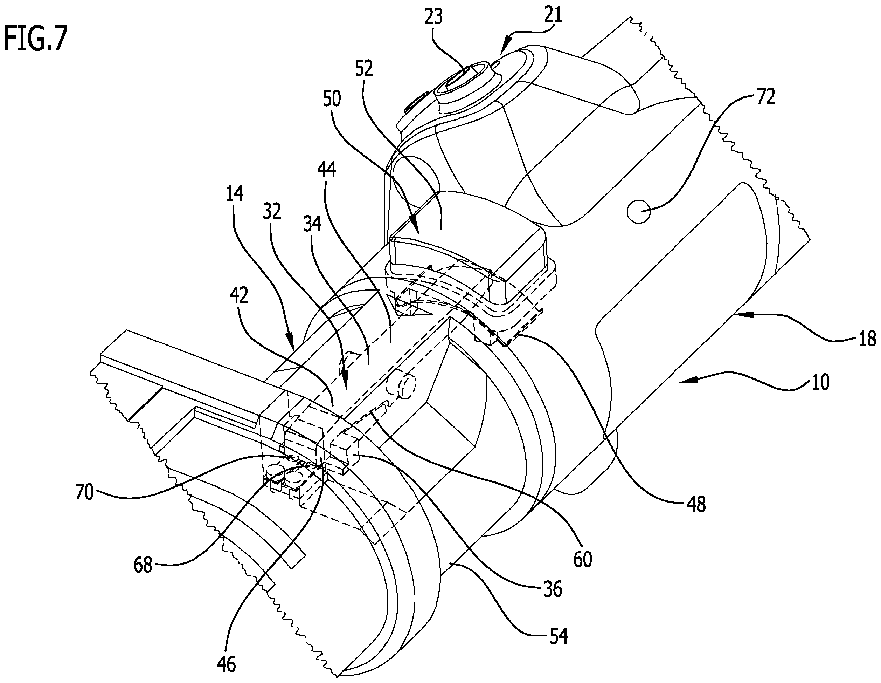

Der Arretierungshebel 34 besteht einschließlich des Hintergreifelements 46 aus einem elektrisch leitfähigen Material, in der dargestellten Ausführungsform aus Metall. An seiner dem Steckbolzen 22 zugewandten Unterseite 62 bildet das Hintergreifelement 46 eine elektrisch leitfähige Kontaktfläche 64 aus, die im vollständig arretierten Zustand der Steckvorrichtung 10 ein erstes elektrisches Kontaktelement 68 und ein zweites elektrisches Kontaktelement 70 der Anschlussvorrichtung 14 kontaktiert. Dies wird insbesondere aus Figur 7 deutlich. Die beiden elektrischen Kontaktelemente 68 und 70 schließen sich in Steckrichtung 24 an das Sperrelement 36 an und sind ebenfalls in der Hebelaufnahme 47 angeordnet.

Das erste elektrische Kontaktelement 68 kann von einem Prüfsignalgenerator der Schweißstromquelle mit einem Prüfsignal beaufschlagt werden, das im vollständig arretierten Zustand der Steckvorrichtung 10 über die elektrisch leitfähige Kontaktfläche 64 des Arretierungshebels 34 an das zweite elektrische Kontaktelement 70 übertragen werden kann, so dass das Prüfsignal im vollständig arretierten Zustand der Steckvorrichtung 10 ausgehend vom Prüfsignalgenerator der Schweißstromquelle über das erste Kontaktelement 68, die elektrisch leitfähige Kontaktfläche 64 und das zweite Kontaktelement 70 einer Detektionseinrichtung der Schweißstromquelle zugeführt und detektiert werden kann. Anhand des detektierten Prüfsignals kann die Schweißstromquelle erkennen, dass der Arretierungshebel 34 seine Arretierungsstellung eingenommen hat, so dass die Steckvorrichtung 10 an der Anschlussvorrichtung 14 vollständig arretiert ist und demzufolge keine Gefahr besteht, dass sich die Steckvorrichtung 10 unbeabsichtigt von der Anschlussvorrichtung 14 löst. Im vollständig arretierten Zustand der Steckvorrichtung 10 ist gewährleistet, dass über den Steckbolzen 22 Schweißstrom und Schweißdraht sicher übertragen werden können und dass gleichzeitig über die Kontaktstifte 28 Steuersignale und Versorgungsspannungen sicher übertragen werden können und über den Gasanschluss 56 Schutzgas sicher übertragen werden kann.

Es kann vorgesehen sein, dass der Steckvorrichtung 10 von der Schweißstromquelle nur dann Schweißstrom sowie Steuersignale und Versorgungsspannungen und/oder sonstige Schweißmedien, beispielsweise Schutzgas oder Schweißdraht, bereitgestellt werden, wenn das von der Schweißstromquelle dem ersten Kontaktelement 68 der Anschlussvorrichtung 14 bereitgestellte Prüfsignal über die elektrisch leitfähige Kontaktfläche 64 des Arretierungshebels 34 und das zweite Kontaktelement 70 der Anschlussvorrichtung 14 zur Schweißstromquelle zurückgeführt wird. Ist dies nicht der Fall, so kann dies die Schweißstromquelle veranlassen, dem Schweißbrenner über die Steckvorrichtung 10 weder Schweißstrom, Steuersignale und Versorgungsspannungen noch sonstige Schweißmedien bereitzustellen.

Der Arretierungshebel 34 ist somit nicht nur dazu eingerichtet und ausgebildet, die Steckvorrichtung 10 an der Anschlussvorrichtung 14 selbsttätig zu arretieren, sondern der Arretierungshebel 34 ist auch dazu eingerichtet und ausgebildet, im vollständig arretierten Zustand der Steckvorrichtung 10 ein Prüfsignal zu übertragen, wobei anhand des Prüfsignals die vollständige Arretierung der Steckvorrichtung 10 erkannt werden kann. Die vollständige Arretierung der Steckvorrichtung 10 an der Anschlussvorrichtung 14 kann dem Benutzer an einem in Figur 7 schematisch dargestellten elektrischen Anzeigeelement in Form einer Leuchtdiode 72 angezeigt werden.

Soll die Steckvorrichtung 10 von der Anschlussvorrichtung 14 gelöst werden, so muss hierzu der Benutzer lediglich den Druckknopf 52 betätigen, so dass der Arretierungshebel 34 aus seiner Arretierungsstellung in seine Freigabestellung bewegt wird, in der er das Sperrelement 36 nicht länger hintergreift. Dies ist in Figur 6 dargestellt. Anschließend kann die Steckvorrichtung 10 entgegen der Steckrichtung 24 von der Anschlussvorrichtung 14 getrennt werden. Das Betätigen des Druckknopfs 52 hat zur Folge, dass die Kontaktfläche 64 des Arretierungshebels 34 von den Kontaktelementen 68 und 70 abhebt und dadurch die elektrische Verbindung zwischen den Kontaktelementen 68, 70 unterbrochen wird. Dies kann von der Schweißstromquelle auf einfache Weise erkannt werden, da nunmehr das Prüfsignal nicht länger übertragen wird.

## Patentansprüche

1. Steckvorrichtung zum Verbinden eines Schweißbrenners mit einer Schweißstromquelle, wobei die Steckvorrichtung (10) einen Steckbolzen (22) zum Übertragen eines Schweißstroms und mehrere Kontaktglieder (28) zum Übertragen von Steuersignalen und/oder mindestens einer Versorgungsspannung aufweist, wobei der Steckbolzen (22) in einer Steckrichtung (24) in eine Steckbolzenaufnahme (26) einer Anschlussvorrichtung (14) einführbar ist, und wobei die Steckvorrichtung (10) ein Arretierungsglied (32) aufweist zum Arretieren der Steckvorrichtung (10) an der Anschlussvorrichtung (14), **dadurch gekennzeichnet, dass** das Arretierungsglied (32) eine elektrisch leitfähige Kontaktfläche (64) aufweist, die im vollständig arretierten Zustand der Steckvorrichtung (10) an mindestens ein elektrisches Kontaktelement (68, 70) der Anschlussvorrichtung (14) anlegbar ist, wobei über die Kontaktfläche (64) im vollständig arretierten Zustand der Steckvorrichtung (10) ein elektrisches Prüfsignal übertragbar ist.

2. Steckvorrichtung nach Anspruch 1, **dadurch gekennzeichnet, dass** die Steckvorrichtung (10) ein elektrisches Anzeigeelement (72) aufweist, an dem der vollständig arretierte Zustand der Steckvorrichtung (10) anzeigbar ist.

3. Steckvorrichtung nach Anspruch 1 oder 2, **dadurch gekennzeichnet, dass** die elektrisch leitfähige Kontaktfläche (64) des Arretierungsglieds (32) im vollständig arretierten Zustand der Steckvorrichtung (10) gleichzeitig an zumindest ein erstes und ein zweites elektrisches Kontaktelement (68, 70) der Anschlussvorrichtung (14) anlegbar ist.

4. Steckvorrichtung nach Anspruch 1,2 oder 3, **dadurch gekennzeichnet, dass** das Arretierungsglied (32) einen sich unmittelbar an die elektrisch leitfähige Kontaktfläche (64) anschließenden Bereich aufweist, der elektrisch leitfähig ist.

5. Steckvorrichtung nach einem der voranstehenden Ansprüche, **dadurch gekennzeichnet, dass** das Arretierungsglied (32) vollständig aus einem elektrisch leitfähigen Material besteht, insbesondere aus Metall und/oder einem elektrisch leitfähigen Kunststoffmaterial.

6. Steckvorrichtung nach einem der voranstehenden Ansprüche, **dadurch gekennzeichnet, dass** das Arretierungsglied (32) zwischen einer Arretierungsstellung und einer Freigabestellung hin und her bewegbar ist, wobei das Arretierungsglied (32) im vollständig arretierten Zustand der Steckvorrichtung (10) die Arretierungsstellung einnimmt.

7. Steckvorrichtung nach Anspruch 6, **dadurch gekennzeichnet, dass** das Arretierungsglied (32) einen Arretierungshebel (34) ausbildet, der um eine Schwenkachse (38) zwischen der Arretierungsstellung und der Freigabestellung hin und her schwenkbar ist.

8. Steckvorrichtung nach Anspruch 7, **dadurch gekennzeichnet, dass** der Arretierungshebel (34) ein Hintergreifelement (46) aufweist, das die elektrisch leitfähige Kontaktfläche (64) aufweist, wobei mittels des Hintergreifelements (46) im vollständig arretierten Zustand der Steckvorrichtung (10) ein Sperrelement (36) der Anschlussvorrichtung (14) hintergreifbar ist unter Anlage der elektrisch leitfähigen Kontaktfläche (64) an dem mindestens einen Kontaktelement (68, 70) der Anschlussvorrichtung (14).

9. Steckvorrichtung nach Anspruch 8, **dadurch gekennzeichnet, dass** der Arretierungshebel (34) in der Arretierungsstellung in Längsrichtung des Steckbolzens (22) ausgerichtet ist und an einem in Steckrichtung (24) vorderen Ende das Hintergreifelement (46) aufweist.

10. Steckvorrichtung nach einem der Ansprüche 7 bis 9, **dadurch gekennzeichnet, dass** die Steckvorrichtung (10) ein mit dem Arretierungshebel (34) zusammenwirkendes, manuell betätigbares Betätigungselement (50) aufweist zum Verschwenken des Arretierungshebels (34) aus der Arretierungsstellung in die Freigabestellung.

11. Steckvorrichtung nach Anspruch 10, **dadurch gekennzeichnet, dass** der Arretierungshebel (34) bezogen auf die Steckrichtung (24) einen vorderen und einen hinteren Hebelarm (42, 44) aufweist, wobei das Hintergreifelement (46) am freien Ende des vorderen Hebelarms (42) angeordnet ist, und wobei das freie Ende des hinteren Hebelarms (44) mit Hilfe des Betätigungselements (50) mit einer Kraft zum Verschwenken des Arretierungshebels (34) aus der Arretierungsstellung in die Freigabestellung beaufschlagbar ist.

12. Verbindungseinrichtung mit einer Steckvorrichtung (10) nach einem der voranstehenden Ansprüche und mit einer Anschlussvorrichtung (14), wobei die Anschlussvorrichtung (14) eine Steckbolzenaufnahme (26) aufweist, in die der Steckbolzen (22) der Steckvorrichtung (10) einführbar ist, und wobei die Anschlussvorrichtung (14) mehrere Gegenkontaktglieder aufweist, die jeweils mit einem Kontaktglied der Steckvorrichtung (10) steckbar verbindbar sind, und wobei die Anschlussvorrichtung (14) mindestens ein elektrisches Kontaktelement (68, 70) aufweist, an das die elektrisch leitfähige Kontaktfläche (64) des Arretierungsglieds (32) der Steckvorrichtung (10) im vollständig arretierten Zustand der Steckvorrichtung (10) anlegbar ist und das mit dem Prüfsignal beaufschlagbar ist.

13. Verbindungseinrichtung nach Anspruch 12, **dadurch gekennzeichnet, dass** die Anschlussvorrichtung (14) mindestens ein erstes und ein zweites elektrisches Kontaktelement (68, 70) aufweist, an die die elektrisch leitfähige Kontaktfläche (64) des Arretierungsglieds (32) im vollständig arretierten Zustand der Steckvorrichtung (10) gleichzeitig anlegbar ist.

14. Verbindungseinrichtung nach Anspruch 12 oder 13, **dadurch gekennzeichnet, dass** die Anschlussvorrichtung (14) ein Sperrelement (36) aufweist, das von einem Hintergreifelement (46) der Steckvorrichtung (10) hintergreifbar ist unter Anlage der elektrisch leitfähigen Kontaktfläche (64) des Arretierungsglieds (32) der Steckvorrichtung (10) an dem mindestens einen elektrischen Kontaktelement (68, 70) der Anschlussvorrichtung (14).

15. Verbindungseinrichtung nach Anspruch 14, **dadurch gekennzeichnet, dass** die Anschlussvorrichtung (14) eine Hebelaufnahme aufweist, in die das Hintergreifelement (46) der Steckvorrichtung (10) einführbar ist und in der das Sperrelement (36) angeordnet ist.
